# EUROPÄISCHE PATENTSCHRIFT

(11) **EP 2 052 476 B1**
(45) Veröffentlichungstag und Bekanntmachung des Hinweises auf die Patenterteilung: **19.05.2010**
(21) Anmeldenummer: 07802375.1
(22) Anmeldetag: 11.07.2007
(51) Int. Cl.: H04B 10/158

(54) **VERFAHREN UND ANORDNUNGEN ZUR VERBESSERUNG DER SIGNALQUALITÄT**
METHODS AND ARRANGEMENTS FOR IMPROVING SIGNAL QUALITY
PROCÉDÉS ET DISPOSITIFS CONÇUS POUR AMÉLIORER LA QUALITÉ DU SIGNAL

(30) Priorität: 28.07.2006 DE 102006035097
(43) Veröffentlichungstag der Anmeldung: 29.04.2009
(73) Patentinhaber: Nokia Siemens Networks GmbH & Co. KG, 81541 München (DE)
(72) Erfinder: RASZTOVITS-WIECH, Michael, A-1170 Wien (AT)
(74) Vertreter: Bruglachner, Thomas E.
(86) Internationale Anmeldenummer: PCT/EP2007/057113
(87) Internationale Veröffentlichungsnummer: WO 2008/012205

(56) Entgegenhaltungen:
- US-A1- 2005 281 565
- LEESON M S: "Calculation of sensitivity penalty for optically preamplified burst mode receivers using Fabry-Perot filters" ELECTRONICS LETTERS, IEE STEVENAGE, GB, Bd. 34, Nr. 11, 28. Mai 1998 (1998-05-28), Seiten 1121-1122, XP006009779 ISSN: 0013-5194
- JABAR S A ET AL: "Minimization of amplified spontaneous emission noise in upstream SuperPON 512 ONU, 10 Gbit/s" 2005 INTERNATIONAL CONFERENCE ON WIRELESS AND OPTICAL COMMUNICATIONS NETWORKS (IEEE CAT. NO. 05EX1035), DUBAI, UNITED ARAB EMIRATES, 6. März 2005 (2005-03-06), - 8. März 2005 (2005-03-08) Seiten 145-149, XP002449309 IEEE PISCATAWAY, NJ, USA ISBN: 0-7803-9019-9

## Beschreibung

Die Erfindung betrifft ein Verfahren und Anordnungen zur Verbesserung der Signalqualität von empfangenen optischen Burstsignalen nach dem Oberbegriff des Patentanspruchs 1 und hierzu geeignete Anordnungen nach den Oberbegriffen der Patentansprüche 10 und 15.

Bei Point-to-Multipoint-Netzen - wie dem passiven optischen Netz (PON) - werden optische Burstsignale (Datenbursts) im Zeitmultiplexverfahren von Teilmehmereinrichtungen (ONTs) zu einer Zentrale (OLT) gesendet. Die Trägerfrequenzen können dabei, insbesondere bei der Verwendung preiswerter Laser, von Burstsignal zu Burstsignal leicht unterschiedlich sein. Zwischen den Teilmehmereinrichtungen und der Empfangseinrichtung der Zentrale bzw. in der Empfangseinrichtung der Zentrale ist mindestens ein optischer Verstärker angeordnet, der optisches Rauschen, die so genannte "Amplified Spontaneous Emission" hinzufügt. Um vom Demodulator ein möglichst störungsfreies Datensignal zu erhalten, ist es notwendig, das optische Empfangssignal möglichst schmalbandig zu filtern, um das optische Rauschen soweit wie möglich zu reduzieren.

Das Dokument "Calculation of sensitivity penalty for optically preamplified burst mode receivers using Fabry-Perot filters", M.S. Leeson, Electronics Letters Letters Vol. 34, No. 11, offenbart ein Verfahren und ein System zur Verbesserung der Signalsqualität von empfangenen optischen Burstsignalen, die von mehreren Teilnehmereinrichtungen zu einer Empfangseinrichtung übertragen werden. Die Empfangseinrichtung hat ein Bandpassfilter, das nach einem optischen Verstärker verwendet wird, um das optische Rauschen des Verstärkers zu reduzieren.

In der Patentanmeldung GB 2315 939 A wird ein Faserverstärker beschrieben, dem ein Tracking-Filter zum Reduzieren des Rauschens nachgeschaltet ist. Der beschriebene Verstärker eignet sich für den Einsatz bei Punkt-zu-Punkt-Verbindungen. Bei Point-to-Multipoint-Verbindungen würde dies aber exakt gleiche Trägerfrequenzen für alle Sendeeinrichtungen der Teilnehmereinrichtungen voraussetzen. Dies bedingt aber wieder frequenzstabilisierte oder frequenzgeregelte Laser, die jedoch erheblich mehr als übliche Laser kosten.

Aufgabe der Erfindung ist es daher, bei Point-to-Multipoint-Systemen ein kostengünstiges Verfahren zur Verbesserung der Signalqualität und eine zur Durchführung des Verfahrens geeignete Anordnungen anzugeben.

Diese Aufgabe wird durch das im Anspruch 1 angegebene Verfahren gelöst. Im Anspruch 10 ist eine hierzu geeignete Anordnung angegeben. Anspruch 15 beschreibt eine Variante der Anordnung.

Das erfindungsgemäße Verfahren verwendet ein abstimmbares Bandpassfilter und hat insbesondere die Vorteile, das weder eine Stabilisierung der Laser der Teilnehmereinrichtungen erforderlich ist, noch ein Servicekanal von der Zentrale zu den Teilnehmereinrichtungen (ONTs) erforderlich ist, um die Frequenzen ihrer Sende-Laser auf den Durchlassbereich des optischen Bandpassfilters abzustimmen. Wesentlich ist eine Voreinstellung des Bandpassfilters, um es in kürzester Zeit an die Eigenschaften der Burstsignale rechtzeitig anzupassen.

Ein weiterer Vorteil ist dadurch gegeben, dass beliebige Teilnehmereinrichtungen angeschaltet werden können, da diese keinerlei Zusatzeinrichtungen zur Frequenzregelung aufweisen müssen.

Um auch die Demodulation und die anschließende Entscheidung für einen Binärwert zu optimieren, kann die Steuerung den optischen Verstärkers oder einen dem Demodulator nachgeschalteten elektrischen Verstärker regeln, um die unterschiedlichen Amplituden der Burstsignale vor der Entscheiderstufe zu egalisieren.

Durch Parallelschalten zweier (oder mehrerer) Bandpassfilter kann das Problem einer zu langen Einstellzeit vermieden werden. Während das eine Bandpassfilter aktiv ist, kann das andere Bandpassfilter auf die Trägerfrequenz des folgenden Bursts eingestellt werden.

Eine weitere Ausführung verwendet eine Filterbank mit mehreren parallel geschalteten optischen Bandpassfiltern, deren Mittenfrequenzen voneinander abweichen. Für jedes empfangene Burstsignal wird das optimale Filter von einer Steuerung ausgewählt.

Die Erfindung wird nunmehr anhand von Ausführungsbeispielen näher beschrieben.

Es zeigen:
- Figur 1: ein Prinzipschaltbild eines passiven optischen Netzes,
- Figur 2: einen Upstream-Rahmen für Burstsignale,
- Figur 3: ein Prinzipschaltbild eines optischen Empfängers,
- Figur 4: eine Variante der Filteranordnung,
- Figur 5: eine Zentrale (OLT) und
- Figur 6: eine Variante der Zentrale mit Filterbänken.

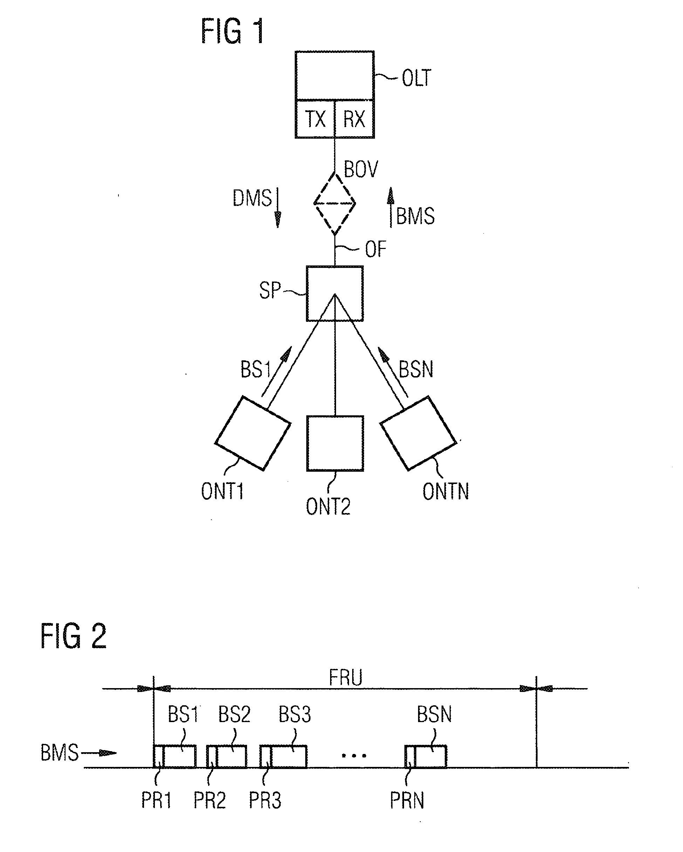

Figur 1 zeigt das Prinzipschaltbild einer Zentrale OLT mit Sendeeinrichtung TX und Empfangseinrichtung RX, die über eine optische Faser OF und einen Splitter SP mit mehreren Teilnehmereinrichtungen ONT1 - ONTN verbunden ist. Von den Teilnehmereinrichtungen werden innerhalb eines in Figur 2 dargestellten Upstream-Pulsrahmens FRU Burstsignale BS1 = BSN im Zeitmultiplexbetrieb, hier als Burst-Zeitmultiplexsignal BMS bezeichnet, gesendet. Nach dem letzten Burstsignal kann eine längere Pause auftreten.

In den Teilnehmereinrichtungen werden die optischen Trägerfrequenzen der Burstsignale von preisgünstigen Lasern erzeugt, so dass die Trägerfrequenzen erheblich voneinander abweichen können. In der Empfangseinrichtung RX der Zentrale OLT werden die ankommenden Burstsignale zunächst in einem in Figur 1 nicht dargestellten optischen Verstärker verstärkt. Der optische Verstärker oder ein weiterer (bidirektionaler) Verstärker BOV (in Figur 1 strichliert eingezeichnet) kann jedoch auch zwischen Splitter und Zentrale angeordnet sein. Durch jeden optischen Empfangsverstärker wird aber weiteres als ASE (amplified spontanious emission) bezeichnetes optisches Rauschen hinzugefügt, das das vorhandene Signal-Rauschen-Verhältnis weiter verschlechtert. Deshalb wird dieser Effekt durch ein dem Verstärker nachgeschaltetes optisches Bandpassfilter reduziert. Die Bandbreite dieses Filters wird möglichst eng gewählt, deshalb muss die Mittenfrequenz bzw. der Durchlassbreich auf die Trägerfrequenzen der unterschiedlichen Burstsignale abgestimmt werden. Durch die genaue Abstimmung der Mittenfrequenz werden gleichzeitig einseitige Verzerrungen der optischen Burstsignale und damit der demodulierten Binärsignale vermieden. Zwar enthält jedes Burstsignal am Burstanfang eine kurze Präambel PR. Während der kurzen Dauer der Präambel ist jedoch eine ausreichend genaue Frequenzmessung und Abstimmung des Bandpassfilters nicht möglich. Dies Problem wird erfindungsgemäß durch eine gesteuerte Voreinstellung (Vorabstimmung) des Bandpassfilters gelöst.

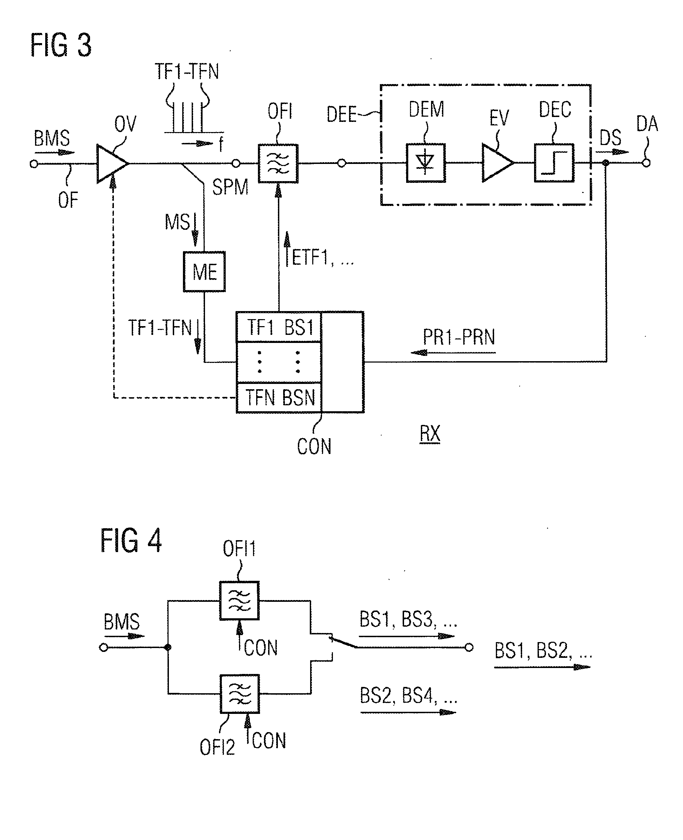

Figur 3 zeigt ein Prinzipschaltbild der Empfangseinrichtung RX. Einem optischen Verstärker OV wird das über die optische Faser OF empfangene Burst-Zeitmultiplexsignal BMS zugeführt, der es verstärkt und ASE hinzufügt. Das verstärkte Signal wird dann über ein einstellbares optisches Bandpassfilter OFI einer Demodulationseinrichtung DEE zugeführt. Diese enthält einen Demodulator DEM, der bei Amplitudenmodulation durch eine Photodiode realisiert sein kann. Dem Demodulator ist die Reihenschaltung eines elektrischen Verstärkers EV und einer Entscheiderstufe DEC nachgeschaltet, die das demodulierte und verstärkte Signal in ein Binärsignal DS umsetzt und an einem Datenausgang DA abgibt.

Zunächst ist es erforderlich für jedes Burstsignal die Trägerfrequenzen zu messen bzw. die Filter-Einstellwerte zu ermitteln. Vom empfangenen Burst-Zeitmultiplexsignal BMS wird durch einen Splitter SPM - hier nach dem optischen Verstärker OV angeordnet - ein Mess-Signal MS abgezweigt und einer Messeinrichtung ME zugeführt, die die Trägerfrequenzen TF1 - TFN der Burstsignale BS1 - BSN misst und die Ergebnisse an eine Steuerung CON (die Teil einer OLT-Systemsteuerung sein kann) weitergibt, die die Messergebnisse direkt oder umgesetzt in Filter-Einstellwerte den Burstsignalen zuordnet und speichert. Die Zuordnung zu den Burstsignalen kann mit Hilfe der Präambeln PR1 bis PRN der Burstsignale erfolgen. Da der Zentrale während des als "Ranging" bezeichneten Verbindungsaufbau ohnehin bekannt ist, welche ONT sie adressiert hat, kann sie die Präambeln als Kontrollfunktion auswerten. Werden die Trägerfrequenzen als Filter-Einstellwerte verwendet, müssen sie noch anhand von gespeicherten Tabellen oder Funktionen in (elektrische) Einstellwerte umgesetzt werden, die direkt die Filtereigenschaften bestimmen. Diese elektrischen Filter-Einstellwerte können ebenso statt der Trägerfrequenzen gespeichert und dann unmittelbar zu Voreinstellung des Bandpassfilters verwendet werden. Die Messung der Trägerfrequenzen bzw. die Bestimmung der Filter-Einstellwerte wird vorteilhaft während einer Einschaltphase (Ranging) vorgenommen, da hier ausreichend Zeit für Messungen zur Verfügung steht. Während des Betriebes können dann zusätzlich Messungen und in der Regel geringfügige Korrekturen der gespeicherten Filter-Einstellwerte oder Trägerfrequenzen erfolgen.

Statt durch Frequenzmessung können die Filter-Einstellwerte direkt durch Abstimmen des Bandpassfilters auf optimale Signalqualität - im einfachsten Fall auf größten Empfangspegel - ermittelt werden. dies kann beispielsweise unter Anwendung des Look-In-Prinzips erfolgen.

Während des Betriebes empfängt die Steuerung CON der Zentrale OLT vom Ausgang der Entscheiderstufe DEC die jedem Burstsignal BS1 - BSN vorangestellte Präambel PR1 - PRN (bzw. der jedem empfangenen Burstsignal zugeordnete Empfangs-Zeitschlitz ist der Systemsteuerung der Zentrale ohnehin bekannt) und stellt nach Ende eines Bursts so früh wie erforderlich die Mittenfrequenz des optischen Bandpassfilters OFI entsprechend der erwarteten Trägerfrequenz für das folgende Burstsignal ein. Dies kann schon bei Ende des vorhergehenden Burstsignals erfolgern. Durch die optimal angepasste Bandbreite die ASE maximal reduziert und die exakt eingestellte Mittenfrequenz ermöglicht eine optimale Demodulation.

Werden Signale mit unterschiedlichen Bandbreiten gesendet, kann auch die Bandbreite des Bandpassfilters durch Voreinstellung angepasst werden.

Um bei Amplitudenmodulation (On-Off) eine optimale Abtastung der demodulierten elektrischen Burstsignale durch die Entscheiderstufe DEC zu erreichen, kann entweder ihr Eingangspegel konstant gehalten oder ihre Schwelle geregelt werden. Eine Amplitudenregelung kann erfolgen, indem entweder die Pegel der optischen Burstsignale geregelt werden oder die Pegel der der Entscheiderstufe zugeführten elektrischen Signale. Eine schnelle Pegelregelung des optischen Empfangssignals kann durch einen Raman- oder Halbleiterverstärker erfolgen. Die gemessenen Pegelwerte bzw. korrespondierende Pegel-Einstellwerte für die Verstärkung werden ebenfalls in der Steuerung CON gespeichert und der optische Verstärker entsprechend voreingestellt. In der gleichen Weise kann der elektrische Verstärker EV voreingestellt werden, so dass die Amplitudenwerte des Eingangssignals der Entscheiderstufe DEC konstant bleiben. Alternativ kann die Schwelle der Entscheiderstufe von Burstsignal zu Burstsignal unterschiedlich voreingestellt werden, um das Eingangssignal stets optimal abzutasten.

Da es zur Zeit noch nicht möglich ist, optische Filter bei hohen PON-Datenraten in der erforderlichen sehr kurzen Zeit neu einzustellen, kann das Zeitproblem gelöst werden, indem das optische Bandpassfilter durch zwei eingangsseitig parallel geschaltete Bandpassfilter OFI1 und OFI2, wie in Figur 4 dargestellt, ersetzt wird. Während vom ersten optischen Bandpassfilter OFI1 das Burstsignal BS1 ausgegeben wird, wird das zweite Bandpassfilter OFI2 bereits auf die Trägerfrequenz TF2 des zweiten Burstsignals BS2 abgestimmt usw., so dass mehr als die gesamte Dauer des Burstsignals BS1 für die Abstimmung zur Verfügung steht. Dies Verfahren kann natürlich auf mehr als zwei Bandpassfilter erweitert werden.

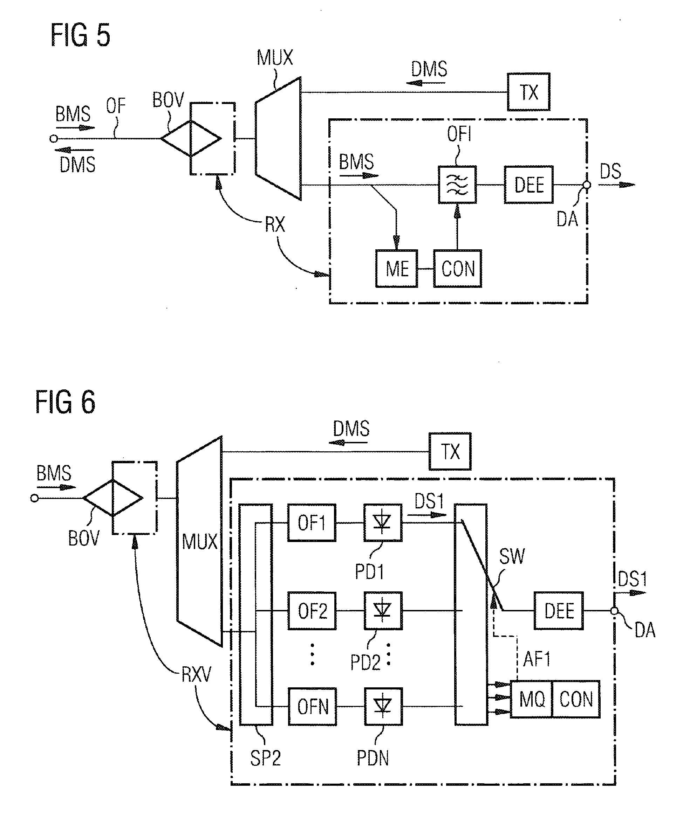

Figur 5 zeigt den prinzipiellen Aufbau einer Zentrale OLT mit der erfindungsgemäßen Empfangseinrichtung RX. In Downstream-Richtung wird ein Downstream-Zeitmultiplexsignal DMS von der Sendeeinrichtung TX über einen Multiplexer MUX und einen bidirektionalen optischen Verstärker BOV über die optische Faser OF zu den Teilnehmereinrichtungen ONT1 - ONTN gesendet. In der Gegenrichtung wird das Burst-Zeitmultiplexsignal BMS empfangen und über den Multiplexer MUX der aus Figur 3 bekannten Empfangseinrichtung RX zugeführt. Deren optischer Empfangsverstärker ist jetzt Teil des bidirektionalen optischen Verstärkers BOV.

Figur 6 zeigt weitere Zentrale OLT2 mit einer Variante der Empfangseinrichtung RXV. Das empfangene Burst-Zeitmultiplexsignal BMS wird durch einen Splitter SP2 auf verschiedene Signalzweige aufgeteilt, in die optische OF1 bis OFN mit voneinander abweichenden Mittenfrequenzen und überlappenden Durchlassbereichen eingeschaltet sind. Äquivalent hierzu ist ein Wellenlängen-Demultiplexer, bei dem sich die Durchlassbereiche der Kanäle ebenfalls überlappen. Die Ausgänge aller optischen Bandpassfilter sind jeweils mit einer Demodulationseinrichtung, hier Photodioden PD1 bis PDN verbunden, die, abhängig von der Übereinstimmung von Durchlassbereich und Trägerfrequenz, elektrische Binärsignale unterschiedlicher Qualität abgeben. Die Qualität ((pseudo) Fehlerrate, OSNR, Augenöffnung) der Binärsignale wird in der Messeinrichtung MQ gemessen, die Messung des Pegels ist in der Regel ausreichend, und von der Steuerung CON ausgewertet. Die optimalen Binärsignale werden jeweils einem Burstsignal zugeordnet als Filter-Auswahlwerte AF1, ..., AFN gespeichert. Im Betriebsfall wird für jedes Burstsignal das qualitativ beste Binärsignal vorausgewählt und über einen Schalter SW (Multiplexer) zur weiteren Verarbeitung an eine die Demodulationseinrichtung DEE durchgeschaltet, die das optimale Binärsignal am Datenausgang DA abgibt.

### Bezugszeichenliste

- OLT: Zentrale (Optical Line Terminal)
- OF: optische Faser
- OV: optischer Verstärker
- SP: Splitter
- ONT1,...: Teilnehmereinrichtung (Optical Network Terminal)
- SP1: Splitter
- OFI: einstellbares optisches Filter
- OFI1, OFI2: einstellbares erstes/zweites optisches Filter
- DEM: Demodulator/optisch/elektrischer Wandler
- EV: elektrischer Verstärker
- DEC: Entscheiderstufe
- CON: Steuerung
- ME: Messeinrichtung
- DMS: Downstream-Zeitmultiplexsignal
- BMS: (Upstream-) Burst-Zeitmultiplexsignal
- TF1: Trägerfrequenz
- DEE: Demodulationseinheit
- FRU: Upstream-Pulsrahmen
- FRA: Rahmenanfang
- PR1, PR2: Präambel
- RX: Empfangseinrichtung
- RA: Rahmenanfangskennung
- ME: Messeinrichtung
- MS: Mess-Signal
- DS: Binärsignal
- DA: Datenausgang
- BS: Burstsignal
- TX: Sendeeinrichtung
- BOV: bidirektionaler optischer Verstärker

## Patentansprüche

1. Verfahren zur Verbesserung der Signalqualität von empfangenen optischen Burstsignalen (BS1, BS2, ..., BSN), die von mehreren Teilnehmereinrichtungen (ONT1, ONT2, ..., ONTN) im Zeitmultiplexbetrieb zu einer Empfangseinrichtung (RX), die einen optischen Verstärker (OV) aufweist, übertragen werden,
**dadurch gekennzeichnet,**
**dass** für jedes Burstsignal (BS1, BS2, ..., BSN) die Mittenfrequenz eines dem optischen Verstärker (RX) nachgeschalteten optischen Bandpassfilters (OFI) entsprechend gespeicherten Filter-Einstellwerten (ETF1, ...) voreingestellt wird.

2. Verfahren nach Anspruch 1,
**dadurch gekennzeichnet,**
**dass** für jedes Burstsignal die Bandbreite des Bandpassfilters (OFI) entsprechend der Datenrate des Burstsignals (BS1, BS2, ..., BSN) voreingestellt wird.

3. Verfahren nach Anspruch 1,
**dadurch gekennzeichnet,**
**dass** die Filter-Einstellwerte (ETF1, ...) durch Abstimmen des optischen Bandpassfilters (OFI) ermittelt werden.

4. Verfahren nach Anspruch 3,
**dadurch gekennzeichnet,**
**dass** während der Inbetriebnahme das Bandpassfilter (OFI) für jedes von einer Teilnehmereinrichtung (ONT1, ...) gesendete Burstsignal (BS1, ...) optimal abgestimmt wird und der entsprechenden Filter-Einstellwert (ETF1, ...) ermittelt und zugeordnet zu dem Burstsignal (BS1, ...) oder der Teilnehmereinrichtung (ONT1, ...) gespeichert wird.

5. Verfahren nach Anspruch 1 oder 2,
**dadurch gekennzeichnet,**
**dass** als Filter-Einstellwert (ETF1, ...) die Trägerfrequenz (TF1, ...) gemessen und gespeichert werden.

6. Verfahren nach Anspruch 5,
**dadurch gekennzeichnet,**
**dass** während der Inbetriebnahme die Trägerfrequenzen (TF1, ..., TFN) der von den Teilnehmereinrichtungen (ONT1, ..., ONTN) gesendeten Signale gemessen werden und zugeordnet zu den Burstsignalen (BS1, ..., BSN) oder Teilnehmereinrichtungen (ONT1, ..., ONTN) gespeichert werden.

7. Verfahren nach einem der Ansprüche 3 bis 6,
**dadurch gekennzeichnet,**
**dass** während des Betriebs Filter-Einstellwerte (ETF1, ...) ermittelt oder die Trägerfrequenzen (TFS1, ...) der Burstsignale (BS1, ...) gemessen und die bisher gespeicherten Filter-Einstellwerte (ETF1, ...) oder die als Filter-Einstellwerte bisher gespeicherten Trägerfrequenzen (TFS1, ...) korrigiert werden.

8. Verfahren nach einem der Ansprüche 1 - 7,
**dadurch gekennzeichnet,**
**dass** die Verstärkung eines die optischen Burstsignale (BS1 - BSN) empfangenden optischen Verstärkers (OV, BOV) in Abhängigkeit von den Burstsignalen (BS1 - BSN) derart voreingestellt wird, dass die Pegel der verstärkten Burstsignale (BS1 - BSN) eine konstante Amplitude aufweisen.

9. Verfahren nach einem der der Ansprüche 1 - 6,
**dadurch gekennzeichnet,**
**dass** die Verstärkung eines elektrischen Verstärkers (EV) derart voreingestellt wird, dass die Eingangspegel der Entscheiderstufe (DEC) bei allen konstant sind oder die Schwelle einer Entscheiderstufe (DEC) entsprechend eingestellt wird, dass bei allen Burstsignalen (BS1 - BSN) eine optimale Abtastung erfolgt.

10. Anordnung zur Verbesserung der Signalqualität von empfangenen optischen Burstsignalen (BS1, BS2, ..., BSN), die von mehreren Teilnehmereinrichtungen (ONT1, ONT2, ..., ONTN) im Zeitmultiplexbetrieb zu einer Empfangseinrichtung (RX) mit einem optischen Verstärker (OV) gesendet werden, dem ein einstellbares optisches Bandpassfilter (OFI) nachgeschaltet ist, und eine Messeinrichtung (ME) sowie eine Steuereinrichtung (CON) zum optimalen Einstellen des Bandpassfilters (OFI) enthält,
**dadurch gekennzeichnet,**
**dass** die die Steuereinrichtung (CON) ausgebildet ist, für jedes Burstsignal (BS1, ...) einen Filter-Einstellwert (ETF1, ...) zu ermitteln und zugeordnet zu dem jeweiligen Burstsignal (BS1, ...) oder der jeweiligen Teilnehmereinrichtung (ONT1, ...) zu speichern und im Betriebsfall entsprechend den gespeicherten Filter-Einstellwerten (ETF1, ...) jeweils die Mittenfrequenz des Bandpassfilters (OFI) für das folgende Burstsignal (BS1, ...) voreinzustellen.

11. Anordnung nach Anspruch 10,
**dadurch gekennzeichnet,**
**dass** Mittenfrequenz und Bandbreite des Bandpassfilters (OFI) einstellbar sind.

12. Anordnung nach Anspruch 11,
**dadurch gekennzeichnet,**
**dass** die Steuerung (CON) ausgebildet ist, bei einer Betriebsaufnahme die Filter-Einstellwerte (ETF1, ...) zu ermitteln oder als Filter-Einstellwert die Trägerfrequenzen (TFS1, ...) der Burstsignale (BS1, ...) zu messen und die ermittelten Werte zugeordnet zu den Burstsignalen (BS1, ...) oder Teilnehmerschaltungen (ON1, ...) zu speichern.

13. Anordnung nach Anspruch 10,
**dadurch gekennzeichnet,**
**dass** zum Bandpassfilters (OFI) ein zweites Bandpassfilters (OFI2) funktional parallel geschaltet ist, wobei die Bandpassfilter (OFI1, OFI2) abwechselnd ein Burstsignal (BS1, BS3, ...) zur weiteren Verarbeitung ausgeben.

14. Anordnung nach einem der Ansprüche 10 bis 12,
**dadurch gekennzeichnet,**
**dass** die Steuerung (CON) ausgebildet ist, während des Betriebes die Filter-Einstellwerte (ETF1, ...) zu ermitteln oder als Filter-Einstellwerte die Trägerfrequenzen (TF1, ...) der Burstsignale (BS1, ...) zu messen und die gespeicherten Werte zu korrigieren.

15. Anordnung zur Verbesserung der Signalqualität von empfangenen optischen Burstsignalen (BS1, BS2, ..., BSN), die von mehreren Teilnehmereinrichtungen (ONT1, ONT2, ..., ONTN) im Zeitmultiplexbetrieb zu einer Empfangseinrichtung (RX) mit einem optischen Verstärker (OV) gesendet werden,
**dadurch gekennzeichnet,**
**dass** dem optischen Verstärker (OV) mehrere funktional parallel geschaltete Bandpassfilter (OF1, OF2, ..., OFN) mit unterschiedlichen Mittenfrequenzen und überlappenden Durchlassbereichen nachgeschaltet sind,
**dass** jedem Bandpassfilter (OF1, OF2, ..., OFN) jeweils ein optisch/elektrischer Wandler (PD1, PD2, ..., PDN) nachgeschaltet ist, der ein elektrisches Binärsignal (DS1, ...) abgibt, und
**dass** eine Steuereinrichtung (CON) derart ausgebildet ist, nach dem Ende eines Burstsignals (BSN) für das folgende Burstsignal (BS1) entsprechend gespeicherten Filter-Auswahlwerten (AF1, ...) oder gespeicherten Trägerfrequenzen (TF1, ...) die optimale Mittenfrequenz aufweisendes Bandpassfilters (OF1) für das folgende Burstsignal (BS2) über einen Selektor (SW) auszuwählen.

16. Anordnung nach Anspruch 15,
**dadurch gekennzeichnet,**
**dass** einer Messeinrichtung (MQ) die elektrischen Binärsignale (DS1, ...) zur Messung der Signalqualität zugeführt werden und dass die Steuerung (CON) ausgebildet ist, aufgrund der gemessenen Signalqualität für jedes Burstsignal (BS1, ...) ein optimales Binärsignal (DS1, ...) auszuwählen und dem entsprechenden Burstsignal (BS1, ...) zugeordnet als Filter-Auswahlwert (AF1, ...) zu speichern.

17. Anordnung nach Anspruch 15 oder 16,
**dadurch gekennzeichnet,**
**dass** die Steuerung (CON) ausgebildet ist, während des Betriebes die Trägerfrequenzen (TF1, ...) der Burstsignale (BS1, ...) zu messen und die gespeicherten Filter-Auswahlwerte (AF1, ...) zu ändern.

18. Anordnung nach einem der Ansprüche 10 bis 17,
**dadurch gekennzeichnet,**
**dass** die Steuerung (CON) ausgebildet ist, die Verstärkung des optischen Verstärkers (OV) derart voreinzustellen, dass die verstärkten Burstsignale (BS1 - BSN) eine konstante Amplitude aufweisen.

19. Anordnung nach einem der Ansprüche 10 bis 17,
**dadurch gekennzeichnet,**
**dass** die Steuerung (CON) ausgebildet ist, die Verstärkung eines dem optisch/elektrischem Wandler nachgeschalteten elektrischen Verstärkers (EV) oder die Schwelle einer dem Demodulator (DEM) oder dem Selektor (SW) nachgeschalteten Entscheiderstufe (DEC) durch Voreinstellung derart zu ändern, dass die Entscheiderstufe (DEC) ihr Eingangssignal optimal abtastet.

## Claims

1. Method for improving the signal quality of received optical burst signals (BS1, BS2, ..., BSN) which are transmitted by several user devices (ONT1, ONT2, ..., ONTN) in time-division multiplex mode to a receiving device (RX) which has an optical amplifier (OV),
**characterized in that** for each burst signal (BS1, BS2, ..., BSN), the center frequency of an optical bandpass filter (OFI) connected downstream of the optical amplifier (RX) is preset in accordance with stored filter adjustment values (ETF1, ...).

2. Method according to Claim 1, **characterized in that** for each burst signal, the bandwidth of the bandpass filter (OFI) is preset in accordance with the data rate of the burst signal (BS1, BS2, ..., BSN).

3. Method according to Claim 1, **characterized in that** the filter adjustment values (ETF1, ...) are determined by tuning the optical bandpass filter (OFI).

4. Method according to Claim 3, **characterized in that**, during the initial startup, the bandpass filter (OFI) is optimally tuned for each burst signal (BS1, ...) transmitted by a user device (ONT1, ...) and the corresponding filter adjustment value (ETF1, ...) is determined and stored, allocated to the burst signal (BS1, ...) or to the user device (ONT1, ...).

5. Method according to Claim 1 or 2, **characterized in that** the carrier frequency is (TF1, ...) is measured and stored as filter adjustment value (ETF1, ...).

6. Method according to Claim 5, **characterized in that**, during the initial startup, the carrier frequencies (TF1, ..., TFN) of the signals transmitted by the user devices (ONT1, ..., ONTN) are measured and stored, allocated to the burst signals (BS1, ..., BSN) or user devices (ONT1, ..., ONTN).

7. Method according to one of Claims 3 to 6, **characterized in that**, during the operation, filter adjustment values (ETF1, ...) are determined or the carrier frequencies (TFS1, ...) of the burst signals (BS1, ...) are measured and the previously stored filter adjustment values (ETF1, ...) or the carrier frequencies (TFS1, ...) previously stored as filter adjustment values are corrected.

8. Method according to one of Claims 1-7, **characterized in that** the amplification of an optical amplifier (OV, BOV) receiving the optical burst signals (BS1 - BSN) is preset in dependence on the burst signals (BS1 - BSN) in such a manner that the levels of the amplified burst signals (BS1 - BSN) have a constant amplitude.

9. Method according to one of Claims 1-6, **characterized in that** the amplification of an electrical amplifier (EV) is preset in such a manner that the input levels of the decider stage (DEC) are constant in all burst signals or the threshold of a decider stage (DEC) is correspondingly adjusted so that optimum sampling occurs with all burst signals (BS1 - BSN).

10. Arrangement for improving the signal quality of received optical burst signals (BS1, BS2, ..., BSN) which are transmitted by several user devices (ONT1, ONT2, ..., ONTN) in time-division multiplex mode to a receiving device (RX) with an optical amplifier (OV), downstream of which an adjustable optical bandpass filter (OFI) is connected, and contains a measuring device (ME) and a controller (CON) for optimally adjusting the bandpass filter (OFI), **characterized in that** the controller (CON) is constructed for determining a filter adjustment value (ETF1, ...) for each burst signal (BS1, ...) and storing it, allocated to the respective burst signal (BS1, ...) or to the respective user device (ONT1, ...) and, in the operating case, presetting the center frequency of the bandpass filter (OFI) for the subsequent burst signal (BS1, ...) in each case in accordance with the stored filter adjustment values (ETF1, ...).

11. Arrangement according to Claim 10, **characterized in that** centre frequency and bandwidth of the bandpass filter (OFI) are adjustable.

12. Arrangement according to Claim 11, **characterized in that** the controller (CON) is constructed for determining, in the case of an initial startup, the filter adjustment values (ETF1, ...) or for measuring, as filter adjustment value, the carrier frequencies (TFS1, ...) of the burst signals (BS1, ...) and storing the determined values allocated to the burst signals (BS1, ...) or user circuits (ON1, ...).

13. Arrangement according to Claim 10, **characterized in that** a second bandpass filter (OFI2) is connected functionally in parallel with the bandpass filter (OFI), wherein the bandpass filters (OFI1, OFI2) alternately output a burst signal (BS1, BS3, ...) for further processing.

14. Arrangement according to one of Claims 10 to 12, **characterized in that** the controller (CON) is constructed to determine, during the operation, the filter adjustment values (ETF1, ...) or to measure as filter adjustment values, the carrier frequencies (TF1, ...) of the burst signals (BS1, ...) and, to correct the stored values.

15. Arrangement for improving the signal quality of received optical burst signals (BS1, BS2, ..., BSN) which are transmitted by several user devices (ONT1, ONT2, ..., ONTN) in time-division multiplex mode to a receiving device (RX) with an optical amplifier (OV), **characterized in that** several bandpass filters (OF1, OF2, ..., OFN), connected functionally in parallel, having different center frequencies and overlapping passbands, are connected downstream of the optical amplifier (OV),
**in that** in each case an optoelectrical transducer (PD1, PD2, ..., PDN), which delivers a binary electrical signal (DS1, ...), is connected downstream of each bandpass filter (OF1, OF2, ..., OFN), and
**in that** a controller (CON) is constructed in such a manner so as to select via a selector (SW), after the end of a burst signal (BSN) for the subsequent burst signal (BS1), the bandpass filter (OF1) having the optimum center frequency in accordance with stored filter selection values (AF1, ...) or stored carrier frequencies (TF1, ...) for the subsequent burst signal (BS2).

16. Arrangement according to Claim 15, **characterized in that** a measuring device (MQ) is supplied with the binary electrical signals (DS1, ...) for measuring the signal quality, and **in that** the controller (CON) is constructed for selecting, on the basis of the measured signal quality, for each burst signal (BS1, ...) an optimum binary signal (DS1, ...) and storing it, allocated to the corresponding burst signal (BS1, ...), as filter selection value (AF1, ...) .

17. Arrangement according to Claim 15 or 16, **characterized in that** the controller (CON) is constructed for measuring the carrier frequencies (TF1, ...) of the burst signals (BS1, ...) during the operation and changing the stored filter selection values (AF1, ...) .

18. Arrangement according to one of Claims 10 to 17, **characterized in that** the controller (CON) is constructed for presetting the amplification of the optical amplifier (OV) in such a manner that the amplified burst signals (BS1 - BSN) have a constant amplitude.

19. Arrangement according to one of Claims 10 to 17, **characterized in that** the controller (CON) is constructed for changing the amplification of an electrical amplifier (EV) connected downstream of the optoelectrical transducer or the threshold of a decider stage (DEC) connected downstream of the demodulator (DEM) or the selector (SW), by presetting in such a manner that the decider stage (DEC) samples its input signal optimally.

## Revendications

1. Procédé destiné à améliorer la qualité du signal de signaux en rafale optiques reçus (BS1, BS2, ..., BSN), lesquels sont transmis depuis plusieurs équipements d'abonnés (ONT1, ONT2, ..., ONTN), en mode de multiplexage temporel, vers un équipement de réception (RX) comprenant un amplificateur optique (OV), **caractérisé en ce que**
pour chaque signal en rafale (BS1, BS2, ..., BSN), on prédéfinit la fréquence centrale d'un filtre passe-bande optique (OFI) placé en aval de l'amplificateur optique (RX), conformément à des valeurs de réglage du filtre (ETF1, ...) mémorisées.

2. Procédé selon la revendication 1,
**caractérisé en ce que**
pour chaque signal en rafale, on prédéfinit la largeur de bande du filtre passe-bande (OFI), conformément au débit binaire du signal en rafale (BS1, BS2, ..., BSN).

3. Procédé selon la revendication 1,
**caractérisé en ce que**
on détermine les valeurs de réglage du filtre (ETF1, ...) en accordant le filtre passe-bande optique (OFI).

4. Procédé selon la revendication 3,
**caractérisé en ce que**
pendant la mise en service, on accorde de façon optimale le filtre passe-bande (OFI) pour chaque signal en rafale (BS1, ...) émis depuis un équipement d'abonné (ONT1, ...), et on détermine la valeur de réglage correspondante du filtre (ETF1, ...) et on mémorise celle-ci de manière associée au signal en rafale (BS1, ...) ou à l'équipement d'abonné (ONT1, ...) .

5. Procédé selon la revendication 1 ou 2,
**caractérisé en ce que**
on mesure et on mémorise comme valeur de réglage du filtre (ETF1, ...) la fréquence porteuse (TF1, ...) .

6. Procédé selon la revendication 5,
**caractérisé en ce que**
pendant la mise en service, on mesure les fréquences porteuses (TF1, ..., TFN) des signaux émis depuis les équipements d'abonnés (ONT1, ..., ONTN) et on mémorise celles-ci de manière associées aux signaux en rafale (BS1, ..., BSN) ou aux équipements d'abonnés (ONT1, ..., ONTN).

7. Procédé selon l'une des revendications 3 à 6,
**caractérisé en ce que**
pendant le fonctionnement, on détermine des valeurs de réglage du filtre (ETF1, ...) ou on mesure les fréquences porteuses (TFS1, ...) des signaux en rafale (BS1, ...), et on corrige les valeurs de réglage du filtre (ETF1, ...) jusqu'alors mémorisées ou les fréquences porteuses (TFS1, ...) jusqu'alors mémorisées comme valeurs de réglage du filtre.

8. Procédé selon l'une des revendications 1 à 7,
**caractérisé en ce que**
on prédéfinit l'amplification d'un amplificateur optique (OV, BOV) recevant les signaux en rafale optiques (BS1 - BSN) en fonction des signaux en rafale optiques (BS1 - BSN) de façon à ce que les niveaux des signaux en rafale (BS1 - BSN) amplifiés présentent une amplitude constante.

9. Procédé selon l'une des revendications 1 à 6,
**caractérisé en ce que**
on prédéfinit l'amplification d'un amplificateur électrique (EV) de façon à ce que les niveaux d'entrée de l'étage décideur (DEC) soit constants pour tous les signaux en rafale (BS1 - BSN) ou on règle de manière adéquate le seuil d'un étage décideur (DEC) de façon à ce qu'un échantillonnage optimal ait lieu pour tous les signaux en rafale (BS1 - BSN).

10. Dispositif destiné à améliorer la qualité du signal de signaux en rafale optiques reçus (BS1, BS2, ..., BSN), lesquels sont transmis depuis plusieurs équipements d'abonnés (ONT1, ONT2, ..., ONTN), en mode de multiplexage temporel, vers un équipement de réception (RX) doté d'un amplificateur optique (OV) en aval duquel est placé un filtre passe-bande optique (OFI) réglable, et comprenant un équipement de mesure (ME) ainsi qu'un équipement de commande (CON) pour le réglage optimal du filtre passe- bande (OFI),
**caractérisé en ce que**
l'équipement de commande (CON) est configuré de manière à déterminer pour chaque signal en rafale (BS1, ...) une valeur de réglage du filtre (ETF1, ...) et à mémoriser celle-ci de manière associée au signal en rafale correspondant (BS1, ...) ou à l'équipement d'abonné correspondant (ONT1, ...) et, en fonctionnement, conformément aux valeurs de réglage du filtre (ETF1, ...) mémorisées, à prédéfinir la fréquence centrale du filtre passe-bande (OFI) pour le signal en rafale (BS1, ...) suivant.

11. Dispositif selon la revendication 10,
**caractérisé en ce que**
la fréquence centrale et la largeur de bande du filtre passe-bande (OFI) sont réglables.

12. Dispositif selon la revendication 11,
**caractérisé en ce que**
la commande (CON) est configurée de manière à déterminer lors d'une mise en service les valeurs de réglage du filtre (ETF1, ...) ou à mesurer comme valeur de réglage du filtre les fréquences porteuses (TFS1, ...) des signaux en rafale (BS1, ...) et à mémoriser les valeurs déterminées de manière associées aux signaux en rafale (BS1, ...) ou aux équipements d'abonnés.

13. Dispositif selon la revendication 10,
**caractérisé en ce que**
un second filtre passe-bande (OFI2) est placé fonctionnellement en parallèle au filtre passe-bande (OFI), les filtres passe-bande (OFI1, OFI2) émettant en alternance un signal en rafale (BS1, BS3, ...) pour traitement ultérieur.

14. Dispositif selon l'une des revendications 10 à 12, **caractérisé en ce que**
la commande (CON) est configurée de manière à déterminer pendant le fonctionnement les valeurs de réglage du filtre (ETF1, ...) ou à mesurer comme valeurs de réglage du filtre les fréquences porteuses (TF1, ...) des signaux en rafale (BS1, ...), et à corriger les valeurs mémorisées.

15. Dispositif destiné à améliorer la qualité du signal de signaux en rafale optiques reçus (BS1, BS2, ..., BSN), lesquels sont transmis depuis plusieurs équipements d'abonnés (ONT1, ONT2, ..., ONTN), en mode de multiplexage temporel, vers un équipement de réception (RX) doté d'un amplificateur optique (OV),
**caractérisé en ce que**
plusieurs filtres passe-bande (OF1, OF2, ..., OFN) placés fonctionnellement en parallèle et avec des fréquences centrales différentes et des bandes passantes chevauchantes sont placés en aval de l'amplificateur optique (OV),
**en ce qu'**un convertisseur optique-électrique (PD1, PD2, ..., PDN) est placé en aval de chaque filtre passe-bande (OF1, OF2, ..., OFN), lequel émet un signal binaire électrique (DS1, ...), et **en ce qu'**un équipement de commande (CON) est configuré de manière à sélectionner au moyen d'un sélectionneur (SW) après la fin d'un signal en rafale (BSN) pour le signal en rafale suivant (BS1), conformément à des valeurs de sélection du filtre (AF1, ...) mémorisées ou des fréquences porteuses (TF1, ...) mémorisées, le filtre passe-bande (OF1) ayant la fréquence centrale optimale pour le signal en rafale suivant (BS2).

16. Dispositif selon la revendication 15,
**caractérisé en ce que**
les signaux binaires électriques (DS1, ...) sont amenés à un équipement de mesure (MQ) afin de mesurer la qualité du signal et **en ce que** la commande (CON) est configurée de manière à sélectionner sur la base de la qualité mesurée du signal pour chaque signal en rafale (BS1, ...) un signal binaire (DS1, ...) optimal et à mémoriser celui-ci de manière associée au signal en rafale correspondant (BS1, ...) comme valeur de sélection du filtre (AF1, ...) .

17. Dispositif selon la revendication 15 ou 16,
**caractérisé en ce que**
la commande (CON) est configurée de manière à mesurer pendant le fonctionnement les fréquences porteuses (TF1, ...) des signaux en rafale (BS1, ...) et à modifier les valeurs de sélection du filtre (AF1, ...) mémorisées.

18. Dispositif selon l'une des revendications 10 à 17,
**caractérisé en ce que**
la commande (CON) est configurée de manière à prédéfinir l'amplification de l'amplificateur optique (OV) de façon à ce que les signaux en rafale (BS1 - BSN) amplifiés présentent une amplitude constante.

19. Dispositif selon l'une des revendications 10 à 17,
**caractérisé en ce que**
la commande (CON) est configurée de manière à modifier par prédéfinition l'amplification d'un amplificateur électrique (EV) placé en aval du convertisseur optique-électrique ou le seuil d'un étage décideur (DEC) placé en aval du démodulateur (DEM) ou du sélecteur (SW) de façon à ce que l'étage décideur (DEC) échantillonne son signal d'entrée d'une manière optimale.
